(19) 

**Europäisches Patentamt**
**European Patent Office**
**Office européen des brevets**

(11) **EP 4 572 253 A1**

(12) **EUROPEAN PATENT APPLICATION**
published in accordance with Art. 153(4) EPC

(43) Date of publication:
**18.06.2025 Bulletin 2025/25**

(21) Application number: **22954430.9**

(22) Date of filing: **10.08.2022**

(51) International Patent Classification (IPC):
**H04L 27/00** *(2006.01)*

(52) Cooperative Patent Classification (CPC):
**H04L 27/00**

(86) International application number:
**PCT/CN2022/111524**

(87) International publication number:
**WO 2024/031455 (15.02.2024 Gazette 2024/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **GAO, Xueyuan**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **PRECODING INDICATION METHOD, APPARATUS, AND STORAGE MEDIUM**

(57) The present invention relates to a precoding indication method, an apparatus, and a storage medium, which relate to the technical field of communications, and are used for performing precoding indication enhancement while ensuring achieving flexibility of terminals. The method comprises: sending single downlink control information (S-DCI), the S-DCI being used for scheduling codebook-based PUSCH transmission of a terminal from a plurality of antenna panels to a plurality of transmission reception points (TRPs), the DCI of the S-DCI scheduling bearing an SRI indication domain, the SRI indication domain being used for indicating an SRS resource combination, which is used for the PUSCH transmission, in an SRS resource set corresponding to a PUSCH, and being used for indicating a spatial filter used when the terminal sends the PUSCH corresponding to the transmission opportunities (TOs) of different panels/TRPs/TCIs/-PUSCHs.

sending S-DCI, in which the S-DCI is configured to schedule codebook-based PUSCH transmission of a terminal from multiple panels to multiple TRPs, in which an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO

S11

FIG. 3

**Description**

**FIELD**

The present invention relates to the field of communication technologies, and in particular relates to a method and an apparatus for indicating precoding, and a storage medium.

**BACKGROUND**

With the development of communication technologies, in order to ensure coverage, in a case where a network device (e.g. a base station) has multiple transmission reception points (TRPs), the multiple TRPs (multi-TRP)/multiple panels may be configured to provide a service to a terminal. Moreover, in order to provide a more balanced quality of service within a service area, a coordinated multiple point transmission (CoMP) technique is introduced.

In the related art, a codebook-based simultaneous transmission via multiple panels (STxMP) of the terminal is supported. In the codebook-based STxMP, the terminal needs to configure at most one sounding reference signal (SRS) resource set for the codebook-based STxMP. The SRS resource set may be configured with multiple SRS resources, and the network device feeds back a SRS resource indicator (SRI) of $\left\lceil \log_2\left(N_{SRS}\right)\right\rceil$ bits according to a numeric count of the SRS resources ($N_{SRS}$) in the SRS resource set to select the SRS resource via the SRI. Furthermore, the network device determines a transmission precoding matrix indicator (TPMI) and a numeric count of transmission layers (i.e., a rank indicator (RI)) actually used by the terminal for transmission and notifies the terminal. Data in pending uplink transmission of the terminal needs to be precoded using the TPMI and RI specified by the network device, and the precoded data is mapped to a corresponding antenna port according to SpatialRelationInfo corresponding to the SRS resource indicated by the SRI.

In the study of related communication protocols, physical downlink control channel (PDCCH), physical uplink control channel (PUCCH) and physical uplink shared channel (PUSCH) are enhanced.

For multi-TRP-based PUSCH enhancement, panel/TRP/transmission configuration indication (TCI) transmission may be scheduled based on a single PDCCH, such as a single downlink control signaling (S-DCI). In order to support the codebook-based STxMP of the terminal, while ensuring the flexibility of the terminal, precoding indication enhancement solutions corresponding to different transmission solutions under S-DCI scheduling need to be considered.

**SUMMARY**

In order to overcome problems existing in related technologies, the present invention provides a method and an apparatus for indicating precoding, and a storage medium.

According to a first aspect of embodiments of the present invention, there is provided a method for indicating precoding, performed by a network device, including: sending S-DCI, in which the S-DCI is configured to schedule codebook-based PUSCH transmission of a terminal from multiple panels to multiple TRPs; an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH transmission occasion (TO).

In an implementation, the SRI indication field includes a single SRI indication field.

In an implementation, the single SRI indication field includes a codepoint, and the codepoint indicates an SRS resource index corresponding to the respective spatial filter used for the PUSCH transmission corresponding to the panel/TRP/TCI/PUSCH TO.

In an implementation, the single SRI indication field includes a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

In an implementation, the single SRI indication field includes a second codepoint, the second codepoint indicates multiple SRS resource sets, and the multiple SRS resource sets are associated with different panels/TRPs/TCIs/PUSCH TOs.

In an implementation, a numeric count of bits of the single SRI indication field is determined according to a numeric count of codepoints included in the single SRI indication field; and a corresponding relationship exists between the numeric count of codepoints and combination information of different SRIs, and the corresponding relationship is predefined or configured by the network device.

In an implementation, the SRI indication field includes multiple SRI indication fields, and different SRI indication fields in the multiple SRI indication fields are respectively associated with different panel/TRP/TCI/PUSCH TO directions.

In an implementation, the PUSCH transmission is performed from a single panel to a single TRP; a same SRI indication field in the multiple SRI indication fields is associated with different SRS resource sets according to indication information of a SRS resource set indication field; and a numeric count of valid bits of the same SRI indication field associated with the different SRS resource sets is determined according to a numeric count of SRS resources included in an SRS resource set associated with the same SRI indication field.

In an implementation, a same numeric count of resources is configured in SRS resource sets associated with different TRP directions, and numeric counts of bits corresponding to different SRI indication fields are the same.

In an implementation, numeric counts of bits corresponding to different SRI indication fields in the multiple SRI indication fields are different.

In an implementation, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

In an implementation, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In an implementation, the multiple SRI indication fields include a first SRI indication field and a second SRI indication field; the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

According to a second aspect of embodiments of the present invention, there is provided a method for indicating precoding, performed by a terminal, including: receiving S-DCI, in which the S-DCI is configured to schedule codebook-based PUSCH transmission of the terminal from multiple panels to multiple TRPs; an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO.

In an implementation, the SRI indication field includes a single SRI indication field.

In an implementation, the single SRI indication field includes a codepoint, and the codepoint indicates an SRS resource index corresponding to the respective spatial filter used for the PUSCH transmission corresponding to the panel/TRP/TCI/PUSCH TO.

In an implementation, the single SRI indication field includes a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

In an implementation, the single SRI indication field includes a second codepoint, the second codepoint indicates multiple SRS resource sets, and the multiple SRS resource sets are associated with different panels/TRPs/TCIs/PUSCH TOs.

In an implementation, a numeric count of bits of the single SRI indication field is determined according to a numeric count of codepoints included in the single SRI indication field; and a corresponding relationship exists between the numeric count of codepoints and combination information of different SRIs, and the corresponding relationship is predefined or configured by the network device.

In an implementation, the SRI indication field includes multiple SRI indication fields, and different SRI indication fields in the multiple SRI indication fields are respectively associated with different panel/TRP/TCI/PUSCH TO directions.

In an implementation, the PUSCH transmission is performed from a single panel to a single TRP; a same SRI indication field in the multiple SRI indication fields is associated with different SRS resource sets according to indication information of a SRS resource set indication field; and a numeric count of valid bits of the same SRI indication field associated with the different SRS resource sets is determined according to a numeric count of SRS resources included in an SRS resource set associated with the same SRI indication field.

In an implementation, a same numeric count of resources is configured in SRS resource sets associated with different TRP directions, and numeric counts of bits corresponding to different SRI indication fields are the same.

In an implementation, numeric counts of bits corresponding to different SRI indication fields in the multiple SRI indication fields are different.

In an implementation, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

EP 4 572 253 A1

In an implementation, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In an implementation, the multiple SRI indication fields include a first SRI indication field and a second SRI indication field; the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

According to a third aspect of embodiments of the present invention, there is provided an apparatus for indicating precoding, including: a sending module configured to send S-DCI, in which the S-DCI is configured to schedule codebook-based PUSCH transmission of a terminal from multiple panels to multiple TRPs; an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO.

In an implementation, the SRI indication field includes a single SRI indication field.

In an implementation, the single SRI indication field includes a codepoint, and the codepoint indicates an SRS resource index corresponding to the respective spatial filter used for the PUSCH transmission corresponding to the panel/TRP/TCI/PUSCH TO.

In an implementation, the single SRI indication field includes a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

In an implementation, the single SRI indication field includes a second codepoint, the second codepoint indicates multiple SRS resource sets, and the multiple SRS resource sets are associated with different panels/TRPs/TCIs/PUSCH TOs.

In an implementation, a numeric count of bits of the single SRI indication field is determined according to a numeric count of codepoints included in the single SRI indication field; and a corresponding relationship exists between the numeric count of codepoints and combination information of different SRIs, and the corresponding relationship is predefined or configured by the network device.

In an implementation, the SRI indication field includes multiple SRI indication fields, and different SRI indication fields in the multiple SRI indication fields are respectively associated with different panel/TRP/TCI/PUSCH TO directions.

In an implementation, the PUSCH transmission is performed from a single panel to a single TRP; a same SRI indication field in the multiple SRI indication fields is associated with different SRS resource sets according to indication information of a SRS resource set indication field; and a numeric count of valid bits of the same SRI indication field associated with the different SRS resource sets is determined according to a numeric count of SRS resources included in an SRS resource set associated with the same SRI indication field.

In an implementation, a same numeric count of resources is configured in SRS resource sets associated with different TRP directions, and numeric counts of bits corresponding to different SRI indication fields are the same.

In an implementation, numeric counts of bits corresponding to different SRI indication fields in the multiple SRI indication fields are different.

In an implementation, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

In an implementation, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In an implementation, the multiple SRI indication fields include a first SRI indication field and a second SRI indication field; the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

According to a fourth aspect of embodiments of the present invention, there is provided an apparatus for

4

indicating precoding, including: a receiving module configured to receive S-DCI, in which the S-DCI is configured to schedule codebook-based PUSCH transmission of the terminal from multiple panels to multiple TRPs; an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO.

In an implementation, the SRI indication field includes a single SRI indication field.

In an implementation, the single SRI indication field includes a codepoint, and the codepoint indicates an SRS resource index corresponding to the respective spatial filter used for the PUSCH transmission corresponding to the panel/TRP/TCI/PUSCH TO.

In an implementation, the single SRI indication field includes a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

In an implementation, the single SRI indication field includes a second codepoint, the second codepoint indicates multiple SRS resource sets, and the multiple SRS resource sets are associated with different panels/TRPs/TCIs/PUSCH TOs.

In an implementation, a numeric count of bits of the single SRI indication field is determined according to a numeric count of codepoints included in the single SRI indication field; and a corresponding relationship exists between the numeric count of codepoints and combination information of different SRIs, and the corresponding relationship is predefined or configured by the network device.

In an implementation, the SRI indication field includes multiple SRI indication fields, and different SRI indication fields in the multiple SRI indication fields are respectively associated with different panel/TRP/TCI/PUSCH TO directions.

In an implementation, the PUSCH transmission is performed from a single panel to a single TRP; a same SRI indication field in the multiple SRI indication fields is associated with different SRS resource sets according to indication information of a SRS resource set indication field; and a numeric count of valid bits of the same SRI indication field associated with the different SRS resource sets is determined according to a numeric count of SRS resources included in an SRS resource set associated with the same SRI indication field.

In an implementation, a same numeric count of resources is configured in SRS resource sets associated with different TRP directions, and numeric counts of bits corresponding to different SRI indication fields are the same.

In an implementation, numeric counts of bits corresponding to different SRI indication fields in the multiple SRI indication fields are different.

In an implementation, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

In an implementation, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In an implementation, the multiple SRI indication fields include a first SRI indication field and a second SRI indication field; the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

The technical solutions provided by embodiments of the present invention may include the following advantageous effects. The network device sends the S-DCI, in which the S-DCI is configured to schedule the codebook-based PUSCH transmission of the terminal from the multiple panels to the multiple TRPs, the SRI indication field is carried in the DCI scheduled by the S-DCI, and the SRI indication field indicates the SRS resource combination configured for the PUSCH transmission in the SRS resource set corresponding to the PUSCH, and indicates the respective spatial filter used by the terminal for the PUSCH transmission corresponding to the panel/TRP/TCI/PUSCH TO. Therefore, after receiving the S-DCI, the terminal may determine the spatial filter for the PUSCH transmission according to the SRS resource combination configured for the PUSCH transmission in the SRS resource set corresponding to the PUSCH indicated by the SRI indication field. In this case, precoding information is indicated while the codebook-based STxMP is performed based on multi-panel/TRP/TCI transmission scheduled by the S-DCI, thereby achieving the enhancement of precoding indication.

It is to be understood that both the foregoing general description and the following detailed description are illustrative and explanatory only and are not restrictive of the disclosure, as claimed.

## BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

FIG. 1 is a schematic diagram illustrating a wireless communication system according to an illustrative embodiment.
FIG. 2 is a schematic diagram illustrating a multi-panel to multi-transmission reception point (MP-MTRP) transmission scenario based on an S-DCI scheduling according to an illustrative embodiment.
FIG. 3 is a flow chart illustrating a method for indicating precoding according to an illustrative embodiment.
FIG. 4 is a flow chart illustrating a method for indicating precoding according to an illustrative embodiment.
FIG. 5 is a block diagram illustrating an apparatus for indicating precoding according to an illustrative embodiment.
FIG. 6 is a block diagram illustrating an apparatus for indicating precoding according to an illustrative embodiment.
FIG. 7 is a block diagram illustrating a device for indicating precoding according to an illustrative embodiment.
FIG. 8 is a block diagram illustrating a device for indicating precoding according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure.

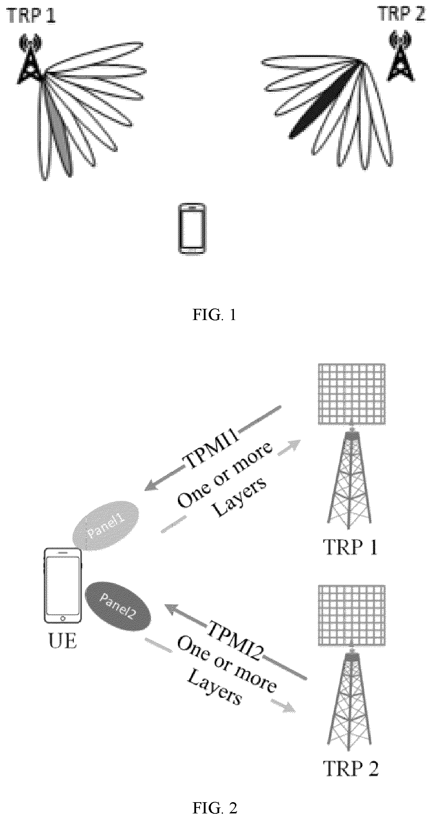

A method for indicating precoding provided by embodiments of the present invention may be applied to a wireless communication system illustrated in FIG. 1. As shown in FIG. 1, the wireless communication system includes a network device and a terminal. The terminal is connected to the network device via a radio resource, and performs data transmission. The data transmission is performed between the network device and the terminal via beams. The enhancement of PUSCH uplink transmission may be performed between the network device and the terminal based on multi-TRP/multi-panel.

It may be understood that a numeric count of TRPs of the network device to perform the data transmission with the terminal based on the multi-TRP/multi-panel may be one or more. The data transmission between the network device and the terminal based on TRP 1 and TRP 2 in the wireless communication system shown in FIG. 1 is merely illustrative and is not limited.

It may be understood that the communication system shown in FIG. 1 is only for schematic illustration. The wireless communication system may also include other network devices, such as core network devices, wireless relay devices, and wireless backhaul devices, which are not shown in FIG 1. The number of network devices and the number of terminals included in the wireless communication system are not limited in embodiments of the present invention.

It may be further understood that the wireless communication system in the embodiment of the present invention is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier frequency division multiple access (SC-FDMA), and carrier sense multiple access with collision avoidance. The network may be divided into a 2nd generation (2G) network, a 3G network, a 4G network, or a future evolution network, such as a 5G network, which may also be referred to as a new radio (NR) network, according to the capacity, rate, delay and other factors of different networks. For ease of description, a wireless communication network will be sometimes abbreviated as a network in the present invention.

Further, the network device involved in the present invention may also be referred to as a radio access network device. The radio access network device may be a base station, an evolved node B, a home base station, an access point (AP) in a wireless fidelity (WIFI) system, a wireless relay node, a wireless backhaul node, a transmission point (TP), a transmission and reception point (TRP), or the like, or may also be a gNB in a NR system, or may also be a component or a part of a device that constitutes a base station, etc. It is to be understood that the specific technology and specific device form adopted by the network device are not limited in the embodiments of the present invention. In the present invention, the network device may provide communication coverage for a particular geographic area and may communicate with the terminal located within the coverage area (cell). The network device may also be a vehicle-mounted device when it is used in a vehicle to everything (V2X) communication system.

Further, the terminal involved in the present invention, which may also be referred to as a terminal device, a user equipment (UE), a mobile station (MS), a mobile terminal (MT), etc., is a device that provides voice and/or data connectivity to a user. For example, the terminal may be a handheld device with a wireless connection function, a vehicle-mounted device, or the like. At present, some examples of the terminal are a smart phone, a pocket personal computer (PPC), a palmtop computer, a personal digital assistant (PDA), a notebook computer, a tablet computer, a wearable device, a vehicle-mounted device, or the like. In addition, the terminal device may also be vehicle-mounted device when it is used in a vehicle to everything (V2X) communication system. It is to be understood that the specific technology and specific device form adopted by the terminal are not limited in the embodiments of the present invention.

In the present invention, the data transmission is performed between the network device and the terminal via the beam(s). The enhancement of the PUSCH uplink transmission may be performed between the network device and the terminal based on the multi-TRP/multi-panel. Specifically, uplink transmission solution of the PUSCH includes a codebook-based uplink transmission solution and a non-codebook-based uplink transmission solution.

In the related art, a codebook-based STxMP of the terminal is supported. In the codebook-based STxMP, the terminal needs to configure at most one SRS resource set for the codebook-based uplink transmission. The SRS resource set may be configured with multiple SRS resources, and the network device informs the terminal of an SRI of $\lceil \log_2(N_{SRS}) \rceil$ bits according to a numeric count of the SRS resources ($N_{SRS}$) in the SRS resource set to select the SRS resource via the SRI.

In the following, a method for indicating the SRI for the multiple SRS resources is given by taking tables 1-3 as an example. In tables 1-3, the SRI(s) represents the numeric count of the SRIs, and $N_{SRS}$ represents the numeric count of SRS resources.

Table 1

| Bit field mapped to index | SRI(s), $N_{SRS} = 2$ |
|---|---|
| 0 | 0 |
| 1 | 1 |

Table 2

| Bit field mapped to index | SRI(s), $N_{SRS} = 3$ |
|---|---|
| 0 | 0 |
| 1 | 1 |
| 2 | 2 |
| 3 | reserved |

Table 3

| Bit field mapped to index | SRI(s), $N_{SRS} = 4$ |
|---|---|
| 0 | 0 |
| 1 | 1 |
| 2 | 2 |
| 3 | 3 |

In the related art, an SRI indication field is defined as shown in Table 4 as following.

Table 4

| Codepoint | SRS resource set | SRI (for non-codebook and codebook)/TPMI (codebook only) field |
|---|---|---|
| 00 | s-TRP mode and associated with a first SRS resource set (TRP 1) | a first SRI/TPMI field (a second SRI/TPMI field is not used) |
| 01 | s-TRP mode and associated with a second SRS resource set (TRP 2) | a first SRI/TPMI field (a second SRI/TPMI field is not used) |
| 10 | m-TRP mode and associated (with a first SRS resource set, a second SRS resource set) | using both a first SRI/TPMI field and a second SRI/TPMI field |

(continued)

| Codepoint | SRS resource set | SRI (for non-codebook and codebook)/TPMI (codebook only) field |
|---|---|---|
| 11 | m-TRP mode and associated (with a second SRS resource set, a first SRS resource set) | using both a first SRI/TPMI field and a second SRI/TPMI field |

In a case where the codepoint of the SRS resource set indication field is 00, it is used to instruct a terminal to use the s-TRP mode to perform PUSCH transmission to TRP 1, where the first SRS resource set is associated. In the codebook-based transmission mode, the first SRI/TPMI field in the DCI is used to obtain an SRI and a TPMI to be used in this transmission. In the non-codebook-based transmission mode, the first SRI field in the DCI is used to obtain an SRI to be used in this transmission. In this case, the second SRI/TPMI field is not used.

In a case where the codepoint of the SRS resource set indication field is 01, it is used to instruct a terminal to use the s-TRP mode to perform PUSCH transmission to TRP 2, where the second SRS resource set is associated. In the codebook-based transmission mode, the first SRI/TPMI field in the DCI is used to obtain an SRI and a TPMI to be used in this transmission. In the non-codebook-based transmission mode, the first SRI field in the DCI is used to obtain an SRI to be used in this transmission. In this case, the second SRI/TPMI field is not used.

In a case where the codepoint of the SRS resource set indication field is 10, it is used to instruct a terminal to use the m-TRP mode to perform PUSCH transmission to TRP 1 at a first TO, where the first SRS resource set is associated; and perform PUSCH transmission to TRP 2 at a second TO. In the codebook-based transmission mode, the first SRI/TPMI field in the DCI is used to obtain an SRI and a TPMI to be used in the transmission to TRP 1, and the second SRI/TPMI field in the DCI is used to obtain an SRI and a TPMI to be used in the transmission to TRP 2. In the non-codebook-based transmission mode, the first SRI/TPMI field in the DCI is used to obtain an SRI to be used in the transmission to TRP 1, and the second SRI/TPMI field in the DCI is used to obtain an SRI to be used in the transmission to TRP 2.

In a case where the codepoint of the SRS resource set indication field is 11, it is used to instruct a terminal to use the m-TRP mode to perform PUSCH transmission to TRP 2 at a first TO, where the second SRS resource set is associated; and perform PUSCH transmission to TRP 1 at a second TO. In the codebook-based transmission mode, the second SRI/TPMI field in the DCI is used to obtain an SRI and a TPMI to be used in the transmission to TRP 2, and the first SRI/TPMI field in the DCI is used to obtain an SRI and a TPMI to be used in the transmission to TRP 1. In the non-codebook based transmission mode, the second SRI/TPMI field in the DCI is used to obtain an SRI to be used in the transmission to TRP 2, and the first SRI/TPMI field in the DCI is used to obtain an SRI to be used in the transmission to TRP 1.

In the codebook-based PUSCH transmission, the network device determines the TPMI and a numeric count of transmission layers (i.e., the RI) actually used by the terminal for transmission and notifies the terminal. Data in the pending uplink transmission of the terminal needs to be precoded using the TPMI and RI specified by the network device, and the precoded data is mapped to a corresponding antenna port according to SpatialRelationInfo corresponding to the SRS resource indicated by the SRI.

The following tables 5 to 13 are TPMI tables for indicating the TPMI and the RI.

Table 5

| Bit field mapped to index | codebookSubset = fullyAndPartialAndNonCoherent | Bit field mapped to index | codebookSubset = partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| … | … | … | … | … | … |
| 3 | 1 layer: TPMI=3 | 3 | 1 layer: TPMI=3 | 3 | 1 layer: TPMI=3 |
| 4 | 2 layers: TPMI=0 | 4 | 2 layers: TPMI=0 | 4 | 2 layers: TPMI=0 |
| … | … | … | … | … | … |
| 9 | 2 layers: TPMI=5 | 9 | 2 layers: TPMI=5 | 9 | 2 layers: TPMI=5 |
| 10 | 3 layers: TPMI=0 | 10 | 3 layers: TPMI=0 | 10 | 3 layers: TPMI=0 |
| 11 | 4 layers: TPMI=0 | 11 | 4 layers: TPMI=0 | 11 | 4 layers: TPMI=0 |
| 12 | 1 layer: TPMI=4 | 12 | 1 layer: TPMI=4 | 12-15 | reserved |
| … | … | … | … | | |
| 19 | 1 layer: TPMI=11 | 19 | 1 layer: TPMI=11 | | |
| 20 | 2 layers: TPMI=6 | 20 | 2 layers: TPMI=6 | | |
| … | … | … | … | | |
| 27 | 2 layers: TPMI=13 | 27 | 2 layers: TPMI=13 | | |
| 28 | 3 layers: TPMI=1 | 28 | 3 layers: TPMI=1 | | |
| 29 | 3 layers: TPMI=2 | 29 | 3 layers: TPMI=2 | | |
| 30 | 4 layers: TPMI=1 | 30 | 4 layers: TPMI=1 | | |
| 31 | 4 layers: TPMI=2 | 31 | 4 layers: TPMI=2 | | |
| 32 | 1 layers: TPMI=12 | | | | |
| … | … | | | | |
| 47 | 1 layers: TPMI=27 | | | | |
| 48 | 2 layers: TPMI=14 | | | | |
| … | … | | | | |
| 55 | 2 layers: TPMI=21 | | | | |
| 56 | 3 layers: TPMI=3 | | | | |
| … | … | | | | |
| 59 | 3 layers: TPMI=6 | | | | |
| 60 | 4 layers: TPMI=3 | | | | |
| 61 | 4 layers: TPMI=4 | | | | |
| 62-63 | reserved | | | | |

Table 6

| Bit field mapped to index | codebookSubset = partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 1 layer: TPMI=13 | 10 | 1 layer: TPMI=13 |
| 11 | 2 layer: TPMI=6 | 11 | 2 layer: TPMI=6 |
| 12 | 1 layer: TPMI=4 | 12-15 | Reserved |
| ... | ... | | |
| 20 | 1 layer: TPMI=12 | | |
| 21 | 1 layer: TPMI=14 | | |
| 22 | 1 layer: TPMI=15 | | |
| 23 | 2 layers: TPMI=7 | | |
| ... | ... | | |
| 29 | 2 layers: TPMI=13 | | |
| 30-31 | Reserved | | |

Table 7

| Bit field mapped to index | codebookSubset = partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| ... | ... | ... | ... |
| 3 | 1 layer: TPMI=3 | 3 | 1 layer: TPMI=3 |
| 4 | 2 layers: TPMI=0 | 4 | 2 layers: TPMI=0 |
| ... | ... | ... | ... |
| 9 | 2 layers: TPMI=5 | 9 | 2 layers: TPMI=5 |
| 10 | 3 layers: TPMI=0 | 10 | 3 layers: TPMI=0 |
| 11 | 4 layers: TPMI=0 | 11 | 4 layers: TPMI=0 |
| 12 | 1 layer: TPMI=13 | 12 | 1 layer: TPMI=13 |
| 13 | 2 layer: TPMI=6 | 13 | 2 layer: TPMI=6 |
| 14 | 3 layer: TPMI=1 | 14 | 3 layer: TPMI=1 |
| 15 | 1 layer: TPMI=4 | 15 | Reserved |
| ... | ... | | |
| 23 | 1 layer: TPMI=12 | | |
| 24 | 1 layer: TPMI=14 | | |
| 25 | 1 layer: TPMI=15 | | |
| 26 | 2 layers: TPMI=7 | | |
| ... | ... | | |
| 32 | 2 layers: TPMI=13 | | |
| 33 | 3 layers: TPMI=2 | | |
| 34 | 4 layers: TPMI=1 | | |
| 35 | 4 layers: TPMI=2 | | |
| 36-63 | Reserved | | |

Table 8

| Bit field mapped to index | codebookSubset = fullyAndPartialAndNonCoherent | Bit field mapped to index | codebookSubset= partialAndNonCoherent | Bit field mapped to index | codebookSubset= nonCoherent |
|---|---|---|---|---|---|
| 0 | 1 layer: TPMI=0 | 0 | 1 layer: TPMI=0 | 0 | 1 layer: TPMI=0 |
| 1 | 1 layer: TPMI=1 | 1 | 1 layer: TPMI=1 | 1 | 1 layer: TPMI=1 |
| … | … | … | … | … | … |
| 3 | 1 layer: TPMI=3 | 3 | 1 layer: TPMI=3 | 3 | 1 layer: TPMI=3 |
| 4 | 1 layer: TPMI=4 | 4 | 1 layer: TPMI=4 | | |
| … | … | … | … | | |
| 11 | 1 layer: TPMI=11 | 11 | 1 layer: TPMI=11 | | |
| 12 | 1 layers: TPMI=12 | 12-15 | reserved | | |
| … | … | | | | |
| 27 | 1 layers: TPMI=27 | | | | |
| 28-31 | reserved | | | | |

Table 9

| Bit field mapped to index | codebookSubset= partialAndNonCoherent | Bit field mapped to index | codebookSubset= nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| … | … | … | … |
| 3 | 1 layer: TPMI=3 | 3 | 1 layer: TPMI=3 |
| 4 | 1 layer: TPMI=13 | 4 | 1 layer: TPMI=13 |
| 5 | 1 layer: TPMI=4 | 5-7 | Reserved |
| … | … | | |
| 13 | 1 layer: TPMI=12 | | |
| 14 | 1 layer: TPMI=14 | | |
| 15 | 1 layer: TPMI=15 | | |

Table 10

| Bit field mapped to index | codebookSubset = fullyAndPartialAndNonCoherent | Bit field mapped to index | codebookSubset = nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 2 layers: TPMI=0 | 2 | 2 layers: TPMI=0 |
| 3 | 1 layer: TPMI=2 | 3 | reserved |
| 4 | 1 layer: TPMI=3 | | |
| 5 | 1 layer: TPMI=4 | | |
| 6 | 1 layer: TPMI=5 | | |
| 7 | 2 layers: TPMI=1 | | |
| 8 | 2 layers: TPMI=2 | | |
| 9-15 | reserved | | |

Table 11

| Bit field mapped to index | codebookSubset= nonCoherent |
|---|---|
| 0 | 1 layer: TPMI=0 |
| 1 | 1 layer: TPMI=1 |
| 2 | 2 layers: TPMI=0 |
| 3 | 1 layer: TPMI=2 |

Table 12

| Bit field mapped to index | codebookSubset = fullyAndPartialAndNonCoherent | Bit field mapped to index | codebookSubset = nonCoherent |
|---|---|---|---|
| 0 | 1 layer: TPMI=0 | 0 | 1 layer: TPMI=0 |
| 1 | 1 layer: TPMI=1 | 1 | 1 layer: TPMI=1 |
| 2 | 1 layer: TPMI=2 | | |
| 3 | 1 layer: TPMI=3 | | |
| 4 | 1 layer: TPMI=4 | | |
| 5 | 1 layer: TPMI=5 | | |
| 6-7 | reserved | | |

Table 13

| Bit field mapped to index | codebookSubset= nonCoherent |
|---|---|
| 0 | 1 layer: TPMI=0 |
| 1 | 1 layer: TPMI=1 |
| 2 | 1 layer: TPMI=2 |
| 3 | Reserved |

In these tables, bit field mapped to index represents a bit field mapped to an index, *codebookSubset* represents a codebook subset, and transmission capability of the codebook subset includes: *fullyAndPartialAndNonCoherent, partialAndNonCoherent* and *nonCoherent.* Taking Table 5 as an example, Table 5 shows precoding information and a numeric count of layers in the codebook subset corresponding to 4 antenna ports and a maximum rank being 2, 3 or 4.

In the above Tables 5-13, each TPMI indicates a precoding. The following Table 14 shows codewords corresponding to single-layer transmission of the 4 antenna ports.

Table 14

| TPMI index | *W* ordered from left to right in increasing order of TPMI index | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16 - 23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

In the study of related communication protocols, PDCCH, PUCCH and PUSCH may be enhanced.

Based on multi-TRP-based PUSCH enhancement, multiple panels/TRPs/TCIs transmission may be scheduled based on a single PDCCH, such as an S-DCI. FIG. 2 is a schematic diagram illustrating an MP-MTRP transmission scenario under S-DCI scheduling. Referring to FIG. 2, a user equipment (UE) sends TPMI 1 from Panel 1 to TRP 1 and sends TPMI 2 from Panel 2 to TRP 2.

In the related art, in non-codebook-based and codebook-based M-TRP transmissions, an SRI field in DCI indicates an SRS resource in an SRS resource set. Since R17 supports two SRS resource sets, a DCI format 0_1/0_2 includes two SRI fields associated with the two SRS resource sets in non-codebook-based M-TRP PUSCH retransmission. Each SRI field indicates the SRI for a TRP. A first SRI field is designed based on a framework of R15/16, and all retransmissions use the same numeric count of layers.

For non-codebook-based transmission, the first SRI field is configured to determine an element in a second SRI field, and the second SRI field only includes an SRI combination associated with a numeric count of layers indicated by the first SRI field. A numeric count of bits N2 of the second SRI field is determined by a maximum numeric count of codepoints per transmission layer among all the transmission layers associated with the first SRI field.

In another related art, the SRI indication field is defined as shown in Table 15 below.

Table 15

| Codepoint | SRS resource set | SRI (for codebook/non-codebook transmission) field/TPMI (for codebook transmission) field |
|---|---|---|
| 00 | s-TRP transmission mode and configured with a first SRS resource set (a first TRP) | a first SRI/TPMI field (a second SRI/TPMI field is not used) |

(continued)

| Codepoint | SRS resource set | SRI (for codebook/non-codebook transmission) field/TPMI (for codebook transmission) field |
|---|---|---|
| 01 | s-TRP transmission mode and configured with a second SRS resource set (a second TRP) | a second SRI/TPMI field (a second SRI/TPMI field is not used) |
| 10 | m-TRP transmission mode a first SRI/TPMI field corresponds to a first SRS resource set a second SRI/TPMI field corresponds to a second SRS resource set | using both a first SRI/TPMI field and a second SRI/TPMI field |
| 11 | m-TRP transmission mode a first SRI/TPMI field corresponds to a first SRS resource set a second SRI/TPMI field corresponds to a second SRS resource set | using both a first SRI/TPMI field and a second SRI/TPMI field |

Table 15 differs from Table 4 in that Table 15 sets that the first SRI/TPMI is associated with the first SRS resource set and the second SRI/TPMI is associated with the second SRS resource set for both s-TRP and m-TRP transmission modes.

Currently, among the above possible transmission solutions corresponding to different multiplexing modes, one or several of solutions will be defined as optional transmission solutions for scheduling for STxMP of the PUSCH.

In m-TRP uplink PUSCH enhancement in the related art, the terminal supporting an S-DCI scheduling performs a time-division transmission solution of a time-division multiplexing (TDM) mode of a PUSCH channel repetition transmission mode by using different beams, i.e. transmission configuration indication (TCI) states in different TRP sending directions. A network may configure different SRS resource sets associated for different TRP sending directions, but requires that rank members corresponding to different TOs are the same. Moreover, numeric counts of SRS resources corresponding to different SRS resource sets are the same and numeric counts of SRS ports are the same, and rank members actually allocated corresponding to different TRP directions are the same, thereby resulting in insufficient flexibility of the terminal.

Therefore, in order to support multi-panel codebook-based STxMP of the terminal in the present invention, while ensuring achieving the flexibility of the terminal, precoding indication enhancement solutions corresponding to different transmission solutions under the S-DCI scheduling need to be considered .

For the multi-panel STxMP, a cooperative transmission scheduling of a transport block (TB) for the PUSCH based on the S-DCI includes multiple different transmission solutions, and each transmission solution is briefly described below.

One solution is a space-division multiplexing (SDM) solution: a TB of the PUSCH is sent on the same time-frequency resource to two different TRPs via corresponding demodulation reference signal (DMRS) ports or port combinations allocated on different panels, and different panels/TRPs/TOs are associated with different TCI states, i.e., beams. On this basis, the SDM solution is also specifically divided into two types, i.e. SDM-A and SDM-B, in which the SDM-A is: different parts of the TB of the PUSCH are sent on the same time-frequency resource to the two different TRPs via the corresponding DMRS ports or the port combinations allocated on different panels, and different panels/TRPs/TOs are associated with different TCI states, i.e., beams; the SDM-B is: repetitions of the same TB corresponding to different RV versions of the PUSCH are sent on the same time-frequency resource to the two different TRPs via the respective corresponding DMRS ports or the port combinations allocated on different panels, and different panels/TRPs/TOs are associated with different TCI states, i.e., beams.

Another solution is a frequency division multiplexing (FDM) solution: a TB of the PUSCH is sent on non-overlapping frequency domain resources on the same time domain resource to two different TRPs via the same DMRS port or port combination allocated on different panels, and different panels/TRPs/TOs are associated with different TCI states, i.e., beams. On this basis, the FDM solution is also specifically divided into two types, i.e., FDM-A and FDM-B, in which the FDM-A is: different parts of the TB of the PUSCH are sent on the non-overlapping frequency domain resources on the same time domain resource to the two different TRPs via the same DMRS port or port combination allocated on different panels, and different panels/TRPs/TOs are associated with different TCI states, i.e., beams; the FDM-B is: repetitions of the same TB corresponding to different RV versions of the PUSCH are sent on the non-overlapping frequency domain resources on the same time domain resource to the two different TRPs via the same DMRS port or port combination allocated on different panels, and different panels/TRPs/TOs are associated with different TCI states, i.e., beams.

Yet another solution is a single frequency network (SFN) multiplexing solution: a TB of the PUSCH is sent on the same time domain resource to two different TRPs via the same DMRS port or port combination allocated on different panels, and different panels/TRPs/TOs are associated with different TCI states, i.e., beams.

For the multi-panel STxMP of the PUSCH of the terminal, one or more of the above solutions will be supported.

In a method for indicating precoding provided by embodiments of the present invention, the SRI indication field is carried in DCI scheduled by the S-DCI, and precoding indication enhancement is performed according to the SRI indication field.

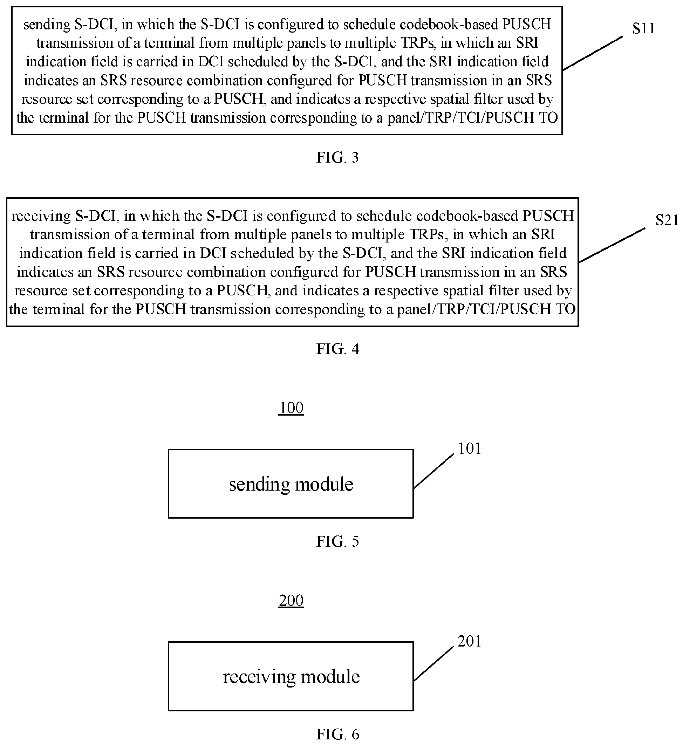

FIG. 3 is a flow chart illustrating a method for indicating precoding according to an illustrative embodiment. As shown in FIG. 3, the method for indicating the precoding is performed by a network device, and includes the following steps.

In step S11, S-DCI is sent, in which the S-DCI is configured to schedule codebook-based PUSCH transmission of a terminal from multiple panels to multiple TRPs.

An SRI indication field is carried in DCI scheduled by the S-DCI, and the SRI indication field indicates an SRS resource combination configured for PUSCH transmission in an SRS resource set corresponding to a PUSCH, and indicates a respective spatial filter, used by the terminal for the PUSCH transmission, corresponding to a panel/TRP/TCI/PUSCH TO.

The uplink PUSCH transmission is performed in TRP directions of multiple base stations. For example, collaborative transmission with a TDM transmission mode sends different repetitions of same information on the PUSCH to different TRPs of the base station via different TOs in a time domain. This method has relatively low requirement on the capability of the terminal, does not require the capability of supporting simultaneous transmission of beams, and has a relatively large transmission delay.

The TOs are associated with different panels/TRPs/TCIs/PUSCH directions according to different TRP transmission directions. In one example, the SRI indication field indicates a multi-TRP transmission state and corresponds to TRP 1 and TRP 2, and a first set of PUSCH TOs are used for transmission to TRP 1 (a first SRS resource set) and a second set of PUSCH TOs are used for transmission to TRP 2 (a second SRS resource set).

For uplink, PUSCH channels passed for different panels/TRPs/TCIs may have very different spatial features, and thus it is considered that parameters of quasi-colocation type D (QCL-D) of the PUSCH channels in different transmission directions are different.

In the codebook-based PUSCH transmission, the network device determines TPMI and RI actually used by the terminal for transmission and notifies the terminal. Data in the pending uplink transmission of the terminal needs to be precoded using the TPMI and RI specified by the network device, and the precoded data is mapped to a corresponding antenna port according to SpatialRelationInfo corresponding to an SRS resource indicated by the SRI. Different SRS resources will use different spatial filters for transmission. Therefore, the precoded data of the terminal needs to be filtered via the spatial filter used by the SRS resource indicated by the SRI. In the embodiments of the present invention, with an enhanced design on the SRI indication field, the spatial filter of the terminal for STxMP under the S-DCI scheduling is indicated according to different panels/TRPs/TCIs/PUSCH TOs, and thus an indication of precoding information is implemented.

In the method for indicating the precoding provided by embodiments of the present invention, the SRI indication field included in the DCI scheduled by the S-DCI is a single SRI indication field.

In the method for indicating the precoding provided by embodiments of the present invention, the SRI indication fields included in the DCI scheduled by the S-DCI are multiple SRI indication fields.

In embodiments of the present invention, in a case where numeric counts of SRI indication fields are different, the SRS resource combinations configured for the PUSCH transmission in the SRS resource set corresponding to the PUSCH indicated by the SRI indication fields are different, and the different panels/TRPs/TCIs/PUSCH TOs are associated with different SRS resource combinations.

In an implementation of the method for indicating the precoding provided by embodiments of the present invention, the SRI indication field included in the DCI scheduled by the S-DCI is the single SRI indication field. The single SRI indication field indicates the SRS resource combination configured for the PUSCH transmission in the SRS resource set corresponding to the PUSCH, and indicates the respective spatial filter used by the terminal for the PUSCH transmission corresponding to the panel/TRP/TCI/PUSCH TO.

In a case where the SRI indication field included in the DCI scheduled by the S-DCI includes the single SRI indication field, a numeric count of TPMI indication fields may be one or more.

In the method for indicating the precoding provided by embodiments of the present invention, in the case where the SRI indication field included in the DCI scheduled by the S-DCI includes the single SRI indication field, an SRS resource index corresponding to the respective spatial filter used for the PUSCH transmission corresponding to the panel/TRP/TCI/PUSCH TO may be indicated according to a codepoint included in the single SRI indication field.

In an example, the single SRI indication field includes the codepoint, and the codepoint indicates the SRS resource index corresponding to the respective spatial filter used for the PUSCH transmission corresponding to the panel/TRP/TCI/PUSCH TO.

The SRS resource index is configured to determine an SRS resource corresponding to the SRS resource index.

For example, the network device configures two SRS resource sets for codebook transmission for the terminal, and two SRS resources are configured in each SRS resource set. A codepoint indication table of the SRI indication field is as shown in Table 16 below.

Table 16

| SRI field codepoint | SRS resource index |
|---|---|
| 00 | a first SRS resource in a first SRS resource set |
| 01 | a first SRS resource in a first SRS resource set, a first SRS resource in a second SRS resource set |
| 10 | a second SRS resource in a first SRS resource set, a first SRS resource in a second SRS resource set |
| 11 | a second SRS resource in a second SRS resource set |

In the method for indicating the precoding provided by embodiments of the present invention, the codepoint included in the single SRI indication field included in the DCI scheduled by the S-DCI may indicate a single SRS resource set, or may indicate multiple SRS resource sets.

As a possible implementation manner, the single SRI indication field includes a first codepoint, the first codepoint indicates the single SRS resource set, and the single SRS resource set is associated with different panels/TRPs/TCIs/-PUSCH TOs or different SRS resource subsets in the single SRS resource set are associated with different panels/TRPs/TCIs/PUSCH TOs.

For example, the single SRS resource set is associated with a first panel/TRP/TCI/PUSCH TO and a second panel/TRP/TCI/PUSCH TO. Alternatively, a single SRS resource subset includes a first SRS resource subset and a second SRS resource subset, in which the first SRS resource subset is associated with the first panel/TRP/TCI/PUSCH TO, and the second SRS resource subset is associated with the second panel/TRP/TCI/PUSCH TO.

As another possible implementation, the single SRI indication field includes a second codepoint, the second codepoint indicates multiple SRS resource sets, and the multiple SRS resource sets are associated with different panels/TRPs/TCIs/PUSCH TOs.

For example, the multiple SRS resource sets includes a first SRS resource set and a second SRS resource set, in which the first SRS resource set is associated with the first panel/TRP/TCI/PUSCH TO, and the second SRS resource set is associated with the second panel/TRP/TCI/PUSCH TO.

In the method for indicating the precoding provided by embodiments of the present invention, a numeric count of bits of the single SRI indication field is determined according to a numeric count of codepoints included in the single SRI indication field. A corresponding relationship exists between the numeric count of codepoints and combination information of different SRIs.

In embodiments of the present invention, the corresponding relationship between the numeric count of codepoints and the combination information of different SRIs is predefined or configured by the network device.

In the method for indicating the precoding provided by embodiments of the present invention, the codepoint included in the SRI indication field included in the DCI scheduled by the S-DCI indicates the numeric count of SRS resources in the SRS resource set, and the numeric count of bits of the SRI indication field included in the DCI scheduled by the S-DCI is determined according to the numeric count of SRS resources included in the SRS resource set. In an example, the network device may determine the numeric count of SRS resources included in the SRS resource set for an uplink transmission parameter and determine the numeric count of bits of the SRI indication field according to the numeric count of SRS resources determined.

For example, in a case where a numeric count of effective codepoints of the SRI indication field is 5, the numeric count of bits of the SRI indication field may be at least 3 bits, and a value range of the SRI indication field may be represented as 000 to 111, corresponding to 0 to 7. For another example, in a case where the numeric count of effective codepoints in the SRI indication field is 4, the numeric count of bits of the SRI indication field may be at least 2 bits, and the value range of the SRI indication field may be represented as 00 to 11, corresponding to 0 to 3.

Regarding the predefined corresponding relationship, for example, a protocol agreement manner, includes a predefined corresponding relationship between the codepoint and the SRS resource set and/or the SRS resource, a special processing manner of an invalid codepoint and the like. Regarding a corresponding relationship configured by the network device, for example, in a case where a numeric count of SRS resources configured in a certain SRS resource set is less than a maximum numeric count of codepoints supported, the network device is supported to configure the above corresponding relationship.

Optionally, a combination of the SRIs for a panel may be a combination of 2 and 2, 3 and 3, or 3 and 4.

In an example, in a case where the combination of SRIs for a panel is a combination of 2 and 3, the corresponding relationship between the codepoint and the SRI is shown in the following Table 17.

Table 17

| Bit field mapped to index | SRI(s), $N_{SRS} = 2$ | Bit field mapped to index | SRI(s), $N_{SRS} = 3$ |
|---|---|---|---|
| 0 | 0 | 0 | 0 |
| 1 | 1 | 1 | 1 |
| 2 | 0,1 | 2 | 2 |
| 3 | reserved | 3 | 0,1 |
| | | 4 | 0,2 |
| | | 5 | 1,2 |
| | | 6-7 | reserved |
| | | | |
| | | | |
| | | | |
| | | | |

In embodiments of the present invention, by configuring the single SRI indication field and jointly indicating the SRS resource set according to the codepoint to associate different panels/TRPs/TCIs/PUSCH Tos, the terminal is allowed to have different solutions for the PUSCH transmission and may flexibly select one of them.

In an example embodiment, a beam pair is indicated by jointly indicating 1 SRS resource set via the SRI codepoint in the single SRI indication field. It may be understood that the numeric count of bits of the single SRI indication field needs to be redefined.

In an example embodiment, a beam pair is indicated by jointly indicating 2 SRS resource sets via the SRI codepoint in the single SRI indication field. The SRI included in the SRI codepoint may be a specific SRS index in different tables or a codepoint corresponding to a SRI field in different tables, and a numeric count of overall SRI bits needs to be redefined.

In another implementation of the method for indicating the precoding provided by embodiments of the present invention, the SRI indication field included in the DCI scheduled by the S-DCI includes multiple SRI indication fields, and different SRI indication fields in the multiple SRI indication fields are respectively associated with different panel/TRP/TCI/PUSCH TO directions.

In the following embodiments of the present invention, for convenience of description, any two different SRI indication fields among the multiple SRI indication fields included in the DCI scheduled by the S-DCI will be referred to as a first SRI indication field and a second SRI indication field.

For example, the first SRI indication field indicates the first SRS resource set for scheduling the PUSCH. The second SRI indication field indicates the second SRS resource set for scheduling the PUSCH. It may be understood that the first SRI indication field corresponds to a first TRP direction, and the second SRI indication field corresponds to a second TRP direction. That is, the first SRI indication field is associated with a first panel/TRP/TCI/PUSCH TO direction, and the second SRI indication field is associated with a second panel/TRP/TCI/PUSCH TO direction.

In the method for indicating the precoding provided by embodiments of the present invention, in a case where the PUSCH transmission is performed from a single panel to a single TRP, a same SRI indication field in the multiple SRI indication fields is associated with different SRS resource sets according to indication information of an SRS resource set indication field.

For example, in a case where the first SRI indication field is used in a single TRP direction, the first SRI indication field may be associated with either the first TRP direction or the second TRP direction, i.e. may be associated with different SRS resource sets according to different indication information.

In the method for indicating the precoding provided by embodiments of the present invention, a numeric count of valid bits of the same SRI indication field associated with the different SRS resource sets is determined according to a numeric count of SRS resources included in an SRS resource set associated with the same SRI indication field.

In the method for indicating the precoding provided by embodiments of the present invention, a same numeric count of resources is configured in SRS resource sets associated with different TRP directions, and numeric counts of bits corresponding to different SRI indication fields are the same.

For example, same numeric counts of ports and SRS resources are configured in the SRS resource sets associated with different TRP directions.

In the method for indicating the precoding provided by embodiments of the present invention, numeric counts of bits corresponding to different SRI indication fields in the multiple SRI indication fields are different.

In the method for indicating the precoding provided by embodiments of the present invention, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

Furthermore, different numeric counts of SRS resources correspond to different SRI indication tables.

For example, the numeric count of bits corresponding to the first SRI indication field is determined according to the numeric count of SRS resources included in the SRS resource set of the first panel/TRP/TCI/PUSCH TO associated with the first SRI indication field, which exemplarily corresponds to Table 1 above. The numeric count of bits corresponding to the second SRI indication field is determined according to the numeric count of SRS resources included in the SRS resource set of the second panel/TRP/TCI/PUSCH TO associated with the second SRI indication field, which exemplarily corresponds to Table 2 above.

In the method for indicating the precoding provided by embodiments of the present invention, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In the method for indicating the precoding provided by embodiments of the present invention, in a case where the multiple SRI indication fields include the first SRI indication field and the second SRI indication field, the first SRI indication field is configured for a spatial filter used for the PUSCH transmission of the panel/TRP/TCI/PUSCH TO associated with the SRS resource set indicated by indication information of the SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of the second panel/TRP/TCI/PUSCH TO, and a numeric count of bits corresponding to the second SRI indication field is determined according to a numeric count of SRS resources in a SRS resource set associated with the second SRI indication field.

For example, in a case where the first SRS resource set is configured with 2 resources, a numeric count of bits of a first SRI field is 1 bit. In a case where the second SRS resource set is configured with 4 resources, a numeric count of bits of a second SRI field is 2 bit. The first SRI field is associated with a first panel, and the second SRI field is associated with a second panel. Regarding a single TRP scenario, a first TRP direction or a second TRP direction is fixedly indicated via the first SRI field. In a case where the first TRP direction is indicated, the first SRS resource set is associated; and in a case where the second TRP direction is indicated, the second SRS resource set is associated. Moreover, 1 bit may not be used for transmission, and therefore a bit of the first SRI indication field should be 2 bits to support transmission in the single TRP scenario.

In embodiments of the present invention, the SRI indication field is enhanced by configuring the numeric count of SRI indication fields and bit data corresponding to the SRI indication fields with different numeric counts. Moreover, the terminal may implement more flexible transmission of the PUSCH by obtaining the respective spatial filter used for the PUSCH transmission corresponding to the panel/TRP/TCI/PUSCH TO. Furthermore, since precoded data of the terminal needs to be filtered by the spatial filter used by the SRS resource indicated by the SRI, precoding indication enhancement is further implemented.

FIG. 4 is a flow chart illustrating a method for indicating precoding according to an illustrative embodiment. As shown in FIG. 4, the method for indicating the precoding is performed by a terminal, and includes the following steps.

In step S21, an S-DCI is received, in which the S-DCI is configured to schedule codebook-based PUSCH transmission of the terminal from multiple panels to multiple TRPs.

An SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO.

In the method for indicating the precoding provided by embodiments of the present invention, the SRI indication field included in the DCI scheduled by the S-DCI is a single SRI indication field.

In the method for indicating the precoding provided by embodiments of the present invention, the SRI indication fields included in the DCI scheduled by the S-DCI are multiple SRI indication fields.

In the method for indicating the precoding provided by embodiments of the present invention, in the case where the SRI indication field included in the DCI scheduled by the S-DCI includes the single SRI indication field, an SRS resource index corresponding to the respective spatial filter used for the PUSCH transmission corresponding to the panel/TRP/TCI/PUSCH TO may be indicated according to a codepoint included in the single SRI indication field.

In an example, the single SRI indication field includes the codepoint, and the codepoint indicates the SRS resource index corresponding to the respective spatial filter used for the PUSCH transmission corresponding to the panel/TRP/TCI/PUSCH TO.

As a possible implementation manner, the single SRI indication field includes a first codepoint, the first codepoint indicates the single SRS resource set, and the single SRS resource set is associated with different panels/TRPs/TCIs/-PUSCH TOs or different SRS resource subsets in the single SRS resource set are associated with different panels/TRPs/TCIs/PUSCH TOs.

As another possible implementation, the single SRI indication field includes a second codepoint, the second codepoint indicates multiple SRS resource sets, and the multiple SRS resource sets are associated with different panels/TRPs/TCIs/PUSCH TOs.

In the method for indicating the precoding provided by embodiments of the present invention, a numeric count of bits of the single SRI indication field is determined according to a numeric count of codepoints included in the single SRI indication field. A corresponding relationship exists between the numeric count of codepoints and combination information of different SRIs.

In embodiments of the present invention, the corresponding relationship exists between the numeric count of codepoints and the combination information of different SRIs is predefined or configured by a network device.

In the method for indicating the precoding provided by embodiments of the present invention, the codepoint included in the SRI indication field included in the DCI scheduled by the S-DCI indicates the numeric count of SRS resources in the SRS resource set, and the numeric count of bits of the SRI indication field included in the DCI scheduled by the S-DCI is determined according to the numeric count of SRS resources included in the SRS resource set. In an example, the network device may determine the numeric count of SRS resources included in the SRS resource set for an uplink transmission parameter and determine the numeric count of bits of the SRI indication field according to the numeric count of SRS resources determined.

In another implementation of the method for indicating the precoding provided by embodiments of the present invention, the SRI indication field included in the DCI scheduled by the S-DCI includes multiple SRI indication fields, and different SRI indication fields in the multiple SRI indication fields are respectively associated with different panel/TRP/TCI/PUSCH TO directions.

In the method for indicating the precoding provided by embodiments of the present invention, in a case where the PUSCH transmission is performed from a single panel to a single TRP, a same SRI indication field in the multiple SRI indication fields is associated with different SRS resource sets according to indication information of an SRS resource set indication field.

In the method for indicating the precoding provided by embodiments of the present invention, a numeric count of valid bits of the same SRI indication field associated with the different SRS resource sets is determined according to a numeric count of SRS resources included in an SRS resource set associated with the same SRI indication field.

In the method for indicating the precoding provided by embodiments of the present invention, a same numeric count of resources is configured in SRS resource sets associated with different TRP directions, and numeric counts of bits corresponding to different SRI indication fields are the same.

In the method for indicating the precoding provided by embodiments of the present invention, numeric counts of bits corresponding to different SRI indication fields in the multiple SRI indication fields are different.

In the method for indicating the precoding provided by embodiments of the present invention, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

In the method for indicating the precoding provided by embodiments of the present invention, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In the method for indicating the precoding provided by embodiments of the present invention, in a case where the multiple SRI indication fields include the first SRI indication field and the second SRI indication field, the first SRI indication field is configured for a spatial filter used for the PUSCH transmission of the panel/TRP/TCI/PUSCH TO associated with the SRS resource set indicated by indication information of the SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of the second panel/TRP/TCI/PUSCH TO, and a numeric count of bits corresponding to the second SRI indication field is determined according to a numeric count of SRS resources in a SRS resource set associated with the second SRI indication field.

The method for indicating the precoding provided by the present invention is applicable to a procedure of the terminal interacting with the network device to implement precoding information indication. In the method of the terminal interacting with the network device to implement the precoding information indication, the terminal and the network device have relevant functions for implementing a precoding indication information method involved in above embodiments, and therefore the description thereof will not be repeated here.

In embodiments of the present invention, the SRI indication field included in the DCI scheduled by the S-DCI indicates the respective spatial filter used by the terminal for the PUSCH transmission corresponding to the panel/TRP/TCI/PUSCH TO, an indication of the spatial filter of the terminal for performing STxMP corresponding to different panels/TRPs/TCIs/PUSCH TOs for an S-DCI scheduling is implemented, and thus an indication of precoding information is implemented.

It should be noted that those skilled in the art may understand that the various implementations/embodiments involved in embodiments of the present invention may be used in conjunction with the aforementioned embodiments or may be used independently. The principles of implementation are similar, whether used alone or in conjunction with the aforementioned embodiments. In the implementation of the present invention, some embodiments are described in terms of implementations used together. Of course, those skilled in the art may understand that such illustrations do not limit embodiments of the present invention.

Based on the same concept, embodiments of the present invention also provide an apparatus for indicating precoding.

It may be understood that, the frequency switching apparatus provided by the embodiments of the present invention includes corresponding hardware structures and/or software modules for performing various functions in order to implement the above-mentioned functions. The embodiments of the present invention may be implemented in a form of hardware or a combination of hardware and computer software in combination with units and algorithm steps of each example disclosed in the embodiments of the present invention. Whether a function is performed by hardware or by hardware driven by computer software depends on specific applications and design constraints of the technical solution. Those skilled in the art may use different methods to implement the described functions for each specific application, but such an implementation should not be regarded as extending beyond the scope of the technical solutions of the embodiments of the present invention.

FIG. 5 is a block diagram illustrating an apparatus for indicating precoding according to an illustrative embodiment. Referring to FIG. 5, the apparatus 100 for indicating the precoding includes a sending module 101. The apparatus 100 for indicating the precoding may be applied to a network device.

The sending module 101 is configured to send S-DCI, in which the S-DCI is configured to schedule codebook-based PUSCH transmission of a terminal from multiple panels to multiple TRPs; an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO.

In an implementation, the SRI indication field includes a single SRI indication field.

In an implementation, the single SRI indication field includes a codepoint, and the codepoint indicates an SRS resource index corresponding to the respective spatial filter used for the PUSCH transmission corresponding to the panel/TRP/TCI/PUSCH TO.

In an implementation, the single SRI indication field includes a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

In an implementation, the single SRI indication field includes a second codepoint, the second codepoint indicates multiple SRS resource sets, and the multiple SRS resource sets are associated with different panels/TRPs/TCIs/PUSCH TOs.

In an implementation, a numeric count of bits of the single SRI indication field is determined according to a numeric count of codepoints included in the single SRI indication field; and a corresponding relationship exists between the numeric count of codepoints and combination information of different SRIs, and the corresponding relationship is predefined or configured by the network device.

In an implementation, the SRI indication field includes multiple SRI indication fields, and different SRI indication fields in the multiple SRI indication fields are respectively associated with different panel/TRP/TCI/PUSCH TO directions.

In an implementation, the PUSCH transmission is performed from a single panel to a single TRP; a same SRI indication field in the multiple SRI indication fields is associated with different SRS resource sets according to indication information of a SRS resource set indication field; and a numeric count of valid bits of the same SRI indication field associated with the different SRS resource sets is determined according to a numeric count of SRS resources included in an SRS resource set associated with the same SRI indication field.

In an implementation, a same numeric count of resources is configured in SRS resource sets associated with different TRP directions, and numeric counts of bits corresponding to different SRI indication fields are the same.

In an implementation, numeric counts of bits corresponding to different SRI indication fields in the multiple SRI indication fields are different.

In an implementation, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

In an implementation, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In an implementation, the multiple SRI indication fields include a first SRI indication field and a second SRI indication field; the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

FIG. 6 is a block diagram illustrating an apparatus for indicating precoding according to an illustrative embodiment. Referring to FIG. 6, the apparatus 200 for indicating the precoding includes a receiving module 201. The apparatus 200 for indicating the precoding may be applied to a network device.

The receiving module 201 is configured to receive S-DCI, in which the S-DCI is configured to schedule codebook-based PUSCH transmission of a terminal from multiple panels to multiple TRPs; an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO.

In an implementation, the SRI indication field includes a single SRI indication field.

In an implementation, the single SRI indication field includes a codepoint, and the codepoint indicates an SRS resource index corresponding to the respective spatial filter used for the PUSCH transmission corresponding to the panel/TRP/TCI/PUSCH TO.

In an implementation, the single SRI indication field includes a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

In an implementation, the single SRI indication field includes a second codepoint, the second codepoint indicates multiple SRS resource sets, and the multiple SRS resource sets are associated with different panels/TRPs/TCIs/PUSCH TOs.

In an implementation, a numeric count of bits of the single SRI indication field is determined according to a numeric count of codepoints included in the single SRI indication field; and a corresponding relationship exists between the numeric count of codepoints and combination information of different SRIs, and the corresponding relationship is predefined or configured by the network device.

In an implementation, the SRI indication field includes multiple SRI indication fields, and different SRI indication fields in the multiple SRI indication fields are respectively associated with different panel/TRP/TCI/PUSCH TO directions.

In an implementation, the PUSCH transmission is performed from a single panel to a single TRP; a same SRI indication field in the multiple SRI indication fields is associated with different SRS resource sets according to indication information of a SRS resource set indication field; and a numeric count of valid bits of the same SRI indication field associated with the different SRS resource sets is determined according to a numeric count of SRS resources included in an SRS resource set associated with the same SRI indication field.

In an implementation, a same numeric count of resources is configured in SRS resource sets associated with different TRP directions, and numeric counts of bits corresponding to different SRI indication fields are the same.

In an implementation, numeric counts of bits corresponding to different SRI indication fields in the multiple SRI indication fields are different.

In an implementation, the numeric counts of bits corresponding to the different SRI indication fields are determined according to numeric counts of SRS resources included in SRS resource sets of the different panels/TRPs/TCIs/PUSCH TOs respectively associated with the multiple SRI indication fields.

In an implementation, a numeric count of SRI codepoints corresponding to a panel/TRP/TCI/PUSCH associated with the multiple SRI indication fields is determined according to an SRS resource index indicated in a corresponding relationship between different SRIs and SRS resource indices.

In an implementation, the multiple SRI indication fields include a first SRI indication field and a second SRI indication field; the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the multiple SRI indication fields; and the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

With regard to the apparatuses in the above embodiments, the specific way in which each module performs operation(s) has been described in detail in the embodiments of the method, and will not be described in detail here.

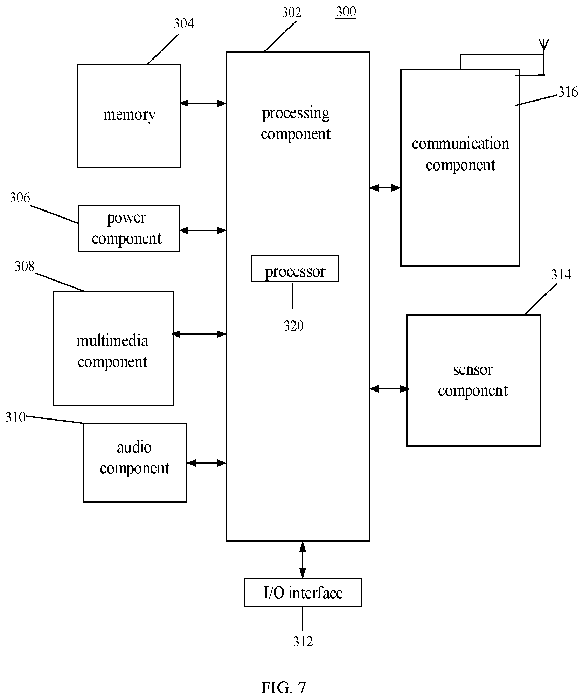

FIG. 7 is a block diagram illustrating a device for indicating precoding according to an illustrative embodiment. For example, a device 300 can be a mobile phone, a computer, a digital broadcast terminal, a messaging device, a game console, a tablet device, a medical device, a fitness device, a personal digital assistant, or the like.

Referring to FIG. 7, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, phone calls, data communications, camera operations, and recording operations. The processing component 302 can include one or more processors 320 to execute instructions to perform all or some of the steps in the above-described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, videos, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and/or the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as keyboards, click wheels, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wireless, between the device 300 and other devices. The device 300 can access a wireless network based on a communication standard, such as Wi-Fi, 2G, or 3G, or a combination thereof. In an illustrative embodiment, the communication component 316 receives a broadcast signal or broadcast associated information from an external broadcast management system via a broadcast channel. In an illustrative embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing steps of the network data collection method in the above-mentioned embodiments.

In an illustrative embodiment, there is also provided a non-transitory computer readable storage medium including instructions, such as included in the memory 304, executable by the processor 320 in the device 300, for completing the above-mentioned network data collection method. For example, the non-transitory computer-readable storage medium may be a ROM, a random access memory (RAM), a CD-ROM, a magnetic tape, a floppy disc, an optical data storage device, and the like.

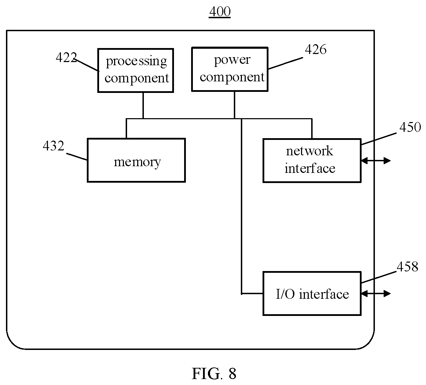

FIG. 8 is a block diagram illustrating a device for indicating precoding according to an illustrative embodiment. For example, the device 400 is provided as a server. Referring to FIG. 8, the device 400 includes a processing component 422 including one or more processors and a memory resource represented by a memory 432. The memory 432 is configured to store instructions executable by the processing component 422, such as an application program. The application program stored in the memory 432 may include one or more modules each corresponding to a set of instructions. In addition, the processing component 422 is configured to execute instructions so as to implement the method displayed in the above information list.

The device 400 may also include a power component 426 configured to perform power management of the device 400, a wired or wireless network interface 450 configured to connect the device 400 to a network, and an input/output (I/O) interface 458. The device 400 may operate an operating system stored in the memory 432, such as Windows ServerTM, Mac OS XTM, UnixTM, LinuxTM, FreeBSDTM or similar operating systems.

In an embodiment, there is also provided a non-transitory computer-readable storage medium including instructions, such as a memory 432 including instructions, which can be executed by a processing component 422 of the device 400 to perform the above methods. For example, the non-transitory computer readable storage medium may be a ROM, a random access memory (RAM), a CD-ROM (compact disc read-only memory), a magnetic tape, a floppy disk, an optical data storage device, etc.

It is further understood that "a plurality" in this disclosure refers to two or more, and other quantifiers are similar thereto. Wording "and/or", which describes an associated relationship of associated objects, means that there may be three relationships, for example, A and/or B, which may mean that A exists alone, A and B exist at the same time, and B exists alone. A character "/" generally indicates that contextual objects are in an "or" relationship. Wording "a/an" and "the" in singular forms are intended to include plural forms, unless clearly indicated in the context otherwise.

It is further understood that terms such as "first", and "second" are used to describe various information, these information should not be limited by these terms. These terms are only used for distinguishing information of the same type from each other and do not denote a particular order or degree of importance. As a matter of fact, the terms such as "first", and "second" may be used interchangeably. For example, first information may also be referred to as second information, and similarly, the second information may also be referred to as the first information, without departing from the scope of embodiments of the present invention.

It is further understood that although operations are described in a specific order in the accompanying drawings in the embodiments of the present invention, it should not be understood that these operations are required to be performed in the specific order shown or in a serial order, or that all of the operations shown are required to be performed to obtain desired results. In certain circumstances, multitasking and parallel processing may be advantageous.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

**Claims**

1.  A method for indicating precoding, performed by a network device, comprising:

    sending single downlink control information (S-DCI), wherein the S-DCI is configured to schedule codebook-based physical uplink shared channel (PUSCH) transmission of a terminal from multiple panels to multiple transmission reception points (TRPs);
    wherein a sounding reference signal resource indicator (SRI) indication field is carried in DCI scheduled by the S-DCI, and the SRI indication field indicates a sounding reference signal (SRS) resource combination configured for PUSCH transmission in an SRS resource set corresponding to a PUSCH, and indicates a respective spatial filter used by the terminal for the PUSCH transmission corresponding to a panel/TRP/transmission configuration indication (TCI)/PUSCH transmission occasion (TO).

2.  The method of claim 1, wherein the SRI indication field comprises a single SRI indication field.

3.  The method of claim 2, wherein the single SRI indication field comprises a codepoint, and the codepoint indicates an SRS resource index corresponding to the respective spatial filter for the PUSCH transmission corresponding to the panel/TRP/TCI/PUSCH TO.

4.  The method of claim 2 or 3, wherein the single SRI indication field comprises a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

5.  The method of claim 2 or 3, wherein the single SRI indication field comprises a second codepoint, the second codepoint indicates a plurality of SRS resource sets, and the plurality of SRS resource sets are associated with different panels/TRPs/TCIs/PUSCH TOs.

6.  The method of claim 3, wherein a numeric count of bits of the single SRI indication field is determined according to a numeric count of codepoints comprised in the single SRI indication field; and
    a corresponding relationship exists between the numeric count of codepoints and combination information of different SRIs, and the corresponding relationship is predefined or configured by the network device.

7.  The method of claim 1, wherein the SRI indication field comprises a plurality of SRI indication fields, and different SRI indication fields in the plurality of SRI indication fields are respectively associated with different panel/TRP/TCI/-PUSCH TO directions.

8.  The method of claim 7, wherein the PUSCH transmission is performed from a single panel to a single TRP;

    a same SRI indication field in the plurality of SRI indication fields is associated with different SRS resource sets according to indication information of a SRS resource set indication field; and
    a numeric count of valid bits of the same SRI indication field associated with the different SRS resource sets is determined according to a numeric count of SRS resources comprised in an SRS resource set associated with the same SRI indication field.

9.  The method of any one of claims 7 to 8, wherein a same numeric count of resources is configured in SRS resource sets associated with different TRP directions, and numeric counts of bits corresponding to different SRI indication fields are the same.

10. The method of any one of claims 7 to 8, wherein numeric counts of bits corresponding to different SRI indication fields in the plurality of SRI indication fields are different.

11. The method of claim 10, wherein the numeric counts of bits corresponding to the different SRI indication fields are determined according to numeric counts of SRS resources comprised in SRS resource sets of the different panels/TRPs/TCIs/PUSCH TOs respectively associated with the plurality of SRI indication fields.

12. The method of claim 11, wherein a numeric count of SRI codepoints corresponding to a panel/TRP/TCI/PUSCH associated with each of the plurality of SRI indication fields is determined according to an SRS resource index indicated in a corresponding relationship between different SRIs and SRS resource indices.

13. The method of any one of claims 9 to 12, wherein the plurality of SRI indication fields comprise a first SRI indication field and a second SRI indication field;

the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the plurality of SRI indication fields; and
the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

14. A method for indicating precoding, performed by a terminal, comprising:

receiving single downlink control information (S-DCI), wherein the S-DCI is configured to schedule codebook-based physical uplink shared channel (PUSCH) transmission of the terminal from multiple panels to multiple transmission reception points (TRPs);
wherein a sounding reference signal resource indicator (SRI) indication field is carried in DCI scheduled by the S-DCI, and the SRI indication field indicates a sounding reference signal (SRS) resource combination configured for PUSCH transmission in an SRS resource set corresponding to a PUSCH, and indicates a respective spatial filter used by the terminal during PUSCH transmission corresponding to a panel/TRP/transmission configuration indication (TCI)/PUSCH transmission occasion (TO).

15. The method of claim 14, wherein the SRI indication field comprises a single SRI indication field.

16. The method of claim 15, wherein the single SRI indication field comprises a codepoint, and the codepoint indicates an SRS resource index corresponding to the respective spatial filter used for the PUSCH transmission corresponding to the panel/TRP/TCI/PUSCH TO.

17. The method of claim 15 or 16, wherein the single SRI indication field comprises a first codepoint, the first codepoint indicates a single SRS resource set, and the single SRS resource set is associated with different panels/TRPs/TCIs/PUSCH TOs or different SRS resource subsets in the single SRS resource set are associated with different panels/TRPs/TCIs/PUSCH TOs.

18. The method of claim 15 or 16, wherein the single SRI indication field comprises a second codepoint, the second codepoint indicates a plurality of SRS resource sets, and the plurality of SRS resource sets are associated with different panels/TRPs/TCIs/PUSCH TOs.

19. The method of claim 16, a numeric count of bits of the single SRI indication field is determined according to a numeric count of codepoints comprised in the single SRI indication field; and
a corresponding relationship exists between the numeric count of codepoints and combination information of different SRIs, and the corresponding relationship is predefined or configured by the network device.

20. The method of claim 14, wherein the SRI indication field comprises a plurality of SRI indication fields, and different SRI indication fields in the plurality of SRI indication fields are respectively associated with different panel/TRP/TCI/-PUSCH TO directions.

21. The method of claim 20, wherein the PUSCH transmission is performed from a single panel to a single TRP;

a same SRI indication field in the plurality of SRI indication fields is associated with different SRS resource sets according to indication information of a SRS resource set indication field; and
a numeric count of valid bits of the same SRI indication field associated with the different SRS resource sets is determined according to a numeric count of SRS resources comprised in an SRS resource set associated with the same SRI indication field.

22. The method of any one of claims 20 to 21, wherein a same numeric count of resources is configured in SRS resource sets associated with different TRP directions, and numeric counts of bits corresponding to different SRI indication fields are the same.

23. The method of any one of claims 20 to 21, wherein numeric counts of bits corresponding to different SRI indication fields in the plurality of SRI indication fields are different.

24. The method of claim 23, wherein the numeric counts of bits corresponding to the different SRI indication fields are determined according to numeric counts of SRS resources comprised in SRS resource sets of the different panels/TRPs/TCIs/PUSCH TOs respectively associated with the plurality of SRI indication fields.

25. The method of claim 24, wherein a numeric count of SRI codepoints corresponding to a panel/TRP/TCI/PUSCH associated with the plurality of SRI indication fields is determined according to an SRS resource index indicated in a corresponding relationship between different SRIs and SRS resource indices.

26. The method of any one of claims 22 to 25, wherein the plurality of SRI indication fields comprise a first SRI indication field and a second SRI indication field;

the first SRI indication field is configured for a spatial filter used for the PUSCH transmission of the panel/TRP/TCI/PUSCH TO associated with the SRS resource set indicated by indication information of an SRS resource set indication field, and the first SRI indication field has a maximum bit bandwidth, and the maximum bit bandwidth is determined according to a numeric count of SRS resources in the SRS resource set indicated by the plurality of SRI indication fields; and
the second SRI indication field indicates a spatial filter used for PUSCH transmission of a second panel/TRP/TCI/PUSCH TO, and a numeric count of bits corresponding to the second SRI indication field is determined according to a numeric count of SRS resources in a SRS resource set associated with the second SRI indication field.

27. An apparatus for indicating precoding, comprising:

a sending module configured to send single downlink control information (S-DCI), wherein the S-DCI is configured to schedule codebook-based physical uplink shared channel (PUSCH) transmission of a terminal from multiple panels to multiple transmission reception points (TRPs);
wherein a sounding reference signal resource indicator (SRI) indication field is carried in DCI scheduled by the S-DCI, and the SRI indication field indicates a sounding reference signal (SRS) resource combination configured for PUSCH transmission in an SRS resource set corresponding to a PUSCH, and indicates a respective spatial filter used by the terminal during PUSCH transmission corresponding to a panel/TRP/transmission configuration indication (TCI)/PUSCH transmission occasion (TO).

28. An apparatus for indicating precoding, comprising:

a receiving module configured to receive single downlink control information (S -DCI), wherein the S-DCI is configured to schedule codebook-based physical uplink shared channel (PUSCH) transmission of the terminal from multiple panels to multiple transmission reception points (TRPs);
wherein a sounding reference signal resource indicator (SRI) indication field is carried in DCI scheduled by the S-DCI, and the SRI indication field indicates a sounding reference signal (SRS) resource combination configured for PUSCH transmission in an SRS resource set corresponding to a PUSCH, and indicates a respective spatial filter used by the terminal during PUSCH transmission corresponding to a panel/TRP/ transmission configuration indication (TCI)/PUSCH transmission occasion (TO).

29. A device for indicating precoding, comprising:

a processor; and
a memory for storing processor-executable instructions;
wherein the processor is configured to perform the method for indicating precoding of any one of claims 1 to 13.

30. A device for indicating precoding, comprising:

a processor; and
a memory for storing processor-executable instructions;
wherein the processor is configured to perform the method for indicating precoding of any one of claims 14 to 26.

31. A storage medium having stored therein instructions that, when executed by a processor of a network device, cause the network device to perform the method for indicating precoding of any one of claims 1 to 13.

32. A storage medium having stored therein instructions that, when executed by a processor of a network device, cause the network device to perform the method for indicating precoding of any one of claims 14 to 26.

TRP 1

TRP 2

FIG. 1

TPMI1
One or more
Layers

TRP 1

Panel1

UE

Panel2

TPMI2
One or more
Layers

TRP 2

FIG. 2

sending S-DCI, in which the S-DCI is configured to schedule codebook-based PUSCH transmission of a terminal from multiple panels to multiple TRPs, in which an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO

S11

FIG. 3

receiving S-DCI, in which the S-DCI is configured to schedule codebook-based PUSCH transmission of a terminal from multiple panels to multiple TRPs, in which an SRI indication field is carried in DCI scheduled by the S-DCI, and the SRI indication field indicates an SRS resource combination configured for PUSCH transmission in an SRS resource set corresponding to a PUSCH, and indicates a respective spatial filter used by the terminal for the PUSCH transmission corresponding to a panel/TRP/TCI/PUSCH TO

S21

FIG. 4

100

sending module

101

FIG. 5

200

receiving module

201

FIG. 6

FIG. 7

<u>400</u>

422 — processing component

426 — power component

432 — memory

450 — network interface

458 — I/O interface

FIG. 8

**INTERNATIONAL SEARCH REPORT**

International application No. **PCT/CN2022/111524**

**A. CLASSIFICATION OF SUBJECT MATTER**

H04L27/00(2006.01)i

According to International Patent Classification (IPC) or to both national classification and IPC

**B. FIELDS SEARCHED**

Minimum documentation searched (classification system followed by classification symbols)

IPC:H04L5/- H04B7/- H04W72/- H04W24/- H04L27/-

Documentation searched other than minimum documentation to the extent that such documents are included in the fields searched

Electronic data base consulted during the international search (name of data base and, where practicable, search terms used)

CNABS, CNTXT, CNKI, VEN, EPTXT, WOTXT, USTXT, 3GPP: 单, 下行控制信息, 调度, 多, 空间滤波器, 码本, 天线, 一, 增强, 指示, 天线面板; codebook, DCI, one, only, panel, PUSCH, single, spatial, filter, SRI, TRP, enhancement?, mult+, "S", S-DCI, indicat+, schedul+, multi+

**C. DOCUMENTS CONSIDERED TO BE RELEVANT**

| Category* | Citation of document, with indication, where appropriate, of the relevant passages | Relevant to claim No. |
|---|---|---|
| X | CN 113766665 A (INTEL CORP.) 07 December 2021 (2021-12-07) description, paragraphs [0033]-[0060], [0068]-[0086] and [0130]-[0137] | 1-2, 14-15, 27-32 |
| Y | CN 113766665 A (INTEL CORP.) 07 December 2021 (2021-12-07) description, paragraphs [0033]-[0060], [0068]-[0086] and [0130]-[0137] | 3-13, 16-26, 29-32 |
| Y | CN 114765879 A (VIVO COMMUNICATION TECHNOLOGY CO., LTD.) 19 July 2022 (2022-07-19) description, paragraphs [0055]-[0070], [0082]-[0136] and [0140]-[0165] | 3-13, 16-26, 29-32 |
| A | CN 110838856 A (TELECOMMUNICATIONS TECHNOLOGY RESEARCH INSTITUTE CO., LTD.) 25 February 2020 (2020-02-25) entire document | 1-32 |
| A | CN 113271188 A (DATANG MOBILE COMMUNICATIONS EQUIPMENT CO., LTD.) 17 August 2021 (2021-08-17) entire document | 1-32 |
| A | WO 2022028262 A1 (FG INNOVATION CO., LTD.) 10 February 2022 (2022-02-10) entire document | 1-32 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **23 April 2023** | **24 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

## INTERNATIONAL SEARCH REPORT

| International application No. |
| --- |
| **PCT/CN2022/111524** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2022149272 A1 (NTT DOCOMO, INC.) 14 July 2022 (2022-07-14) entire document | 1-32 |
| A | US 2022239440 A1 (LG ELECTRONICS INC.) 28 July 2022 (2022-07-28) entire document | 1-32 |

Form PCT/ISA/210 (second sheet) (July 2022)

**INTERNATIONAL SEARCH REPORT**
Information on patent family members

International application No.

**PCT/CN2022/111524**

| Patent document cited in search report | | | Publication date (day/month/year) | Patent family member(s) | | | Publication date (day/month/year) |
|---|---|---|---|---|---|---|---|
| CN | 113766665 | A | 07 December 2021 | None | | | |
| CN | 114765879 | A | 19 July 2022 | WO | 2022152271 | A1 | 21 July 2022 |
| CN | 110838856 | A | 25 February 2020 | KR | 20210046030 | A | 27 April 2021 |
| | | | | TW | 202010355 | A | 01 March 2020 |
| | | | | EP | 3826198 | A1 | 26 May 2021 |
| | | | | EP | 3826198 | A4 | 01 September 2021 |
| | | | | US | 2021168839 | A1 | 03 June 2021 |
| | | | | WO | 2020034831 | A1 | 20 February 2020 |
| | | | | TW | 711334 | B1 | 21 November 2020 |
| | | | | JP | 2021533701 | W | 02 December 2021 |
| | | | | CN | 10838856 | B | 26 November 2021 |
| | | | | IN | 202127006318 | A | 17 December 2021 |
| CN | 113271188 | A | 17 August 2021 | CN | 113271188B | B | 26 December 2022 |
| WO | 2022028262 | A1 | 10 February 2022 | None | | | |
| WO | 2022149272 | A1 | 14 July 2022 | None | | | |
| US | 2022239440 | A1 | 28 July 2022 | EP | 3982582 | A1 | 13 April 2022 |
| | | | | WO | 2020246819 | A1 | 10 December 2020 |
| | | | | KR | 20220018509 | A | 15 February 2022 |

Form PCT/ISA/210 (patent family annex) (July 2022)